# EUROPÄISCHE PATENTANMELDUNG

(11) **EP 2 106 034 A2**
(43) Veröffentlichungstag der Anmeldung: **30.09.2009**
(21) Anmeldenummer: 09155872.6
(22) Anmeldetag: 23.03.2009
(51) Int. Cl.: H04B 5/02, G08C 17/04

(54) **Galvanisch getrenntes Energie- und Datenübertragungsmodul**

(30) Priorität: 23.03.2008 DE 202008003987 U
(71) Anmelder: Aizo AG, 35578 Wetzlar (DE)
(72) Erfinder: Deckers, Volker, 52538, Gangelt (DE)
(74) Vertreter: Englaender, Klaus

(57) **Zusammenfassung**

Galvanisch getrennter Übertrager mit einer Primärseite und einer Sekundärseite, der zur Einsparung von Bauteilen und Energieverbrauch Daten von der Primär auf Sekundärseite übertragen werden können und umgekehrt, basierend darauf, daß die einer ersten Datenzufuhr bereitgestellten Daten für die Übertragung über das galvanisch getrennte Energie- und Datenübertragungsmodul auf Basis eines veränderten Pulses eingeleitet wird, und basierend darauf daß daß die einer zweiten Datenzufuhr bereitgestellten Daten für die Übertragung über das galvanisch getrennte Energie- und Datenübertragungsmodul in die andere Richtung auf Basis der Länge des selben Pulses eingeleitet wird.

## Beschreibung

Die Anmeldung betrifft ein galvanisch getrenntes Energie- und Datenübertragungsmodul.

Bekannt ist, daß mit Hilfe galvanischer Trennung zwar Wechselstrom, aber kein Gleichstrom übertragen werden kann.

Im Fall, daß Verbraucher über die Datenleitung zusätzlich noch mit Energie zu versorgen sind besteht die Möglichkeit, z.B. mit Hilfe eines Erkennungsmoduls eine anstehende Datenüberragung zu erkennen, die dann einen Schalter schaltet, der wiederum dem Verbraucher die zur Datenerkennung und / oder Datenverarbeitung notwendige Energie zuführt.

Aufgabe der Erfindung ist es, eine kompaktere Möglichkeit der Energie- und Datenüberragung bereitzustellen.

Gelöst wir diese Aufgabe durch die Merkmale der unabhängigen Ansprüche Vorteilhafte Ausgestaltungsformen gehen aus den Unteransprüchen hervor.

Insbesondere wird die Aufgabe gelöst durch ein galvanisch getrenntes Energie- und Datenübertragungsmodul, umfassend einen Übertrager mit einer Primärseite und einer Sekundärseite, wobei an der Primärseite angeschlossen sind, eine Energiezufuhr zur Versorgung des galvanisch getrennten Energie- und Datenübertragungsmoduls mit Energie, und eine erste Datenzufuhr, die zur Übertragung von der Primärseite auf die Sekundärseite dem galvanisch getrennten Energie- und Datenübertragungsmodul erste Daten zuführt und ein, Pulsgenerator, wobei der Pulsgenerator in der Lage ist, Pulse unterschiedlicher Dauer zu generieren und eine Empfangervonichtung, die die Erkennung von dem durch den Pulsgenerator erzeugten und von der Primär- auf die Sekundärseite übertragenen und auf der Sekundärseite veränderten und nach der Veränderung auf die Primärseite rückübertragenen Pulse erlaubt, und eine primäre Logikschaltung die, die von der ersten Datenzufuhr bereitgestellten Daten für die Übertragung über das galvanisch getrennte Energie- und Datenübertragungsmodul verarbeitbar macht, und die von der Sekundärseite Informationen in der Gestalt des auf der Sekundärseite veränderten Pulse über die Empfängervorrichtung zugeführt bekommt und die die Übertragung die die Übertragung der an der ersten Datenzufuhr anliegenden Daten von der Primärseite auf die Sekundärseite über das galvanisch getrennte Energie- und Datenübertragungsmodul auf Basis des veränderten Pulses einleitet, und wobei an der Sekundärseite angeschlossen sind eine zweite Datenzufuhr, die zur Übertragung von der Sekundärseite auf die Primärseite dem galvanisch getrennten Energie-und Datenübertragungsmodul zweite Daten zuführt und, ein Bitempfänger, der insbesondere eine kombinierte Bitempfänger/Ladungsextraktor ist, der geeignet ist, die vom Puilsgenerator erzeugten Pulse zu empfangen und der geeignet ist, unterschiedliche Pulsdauern des Pulsgenerators zu erkennen, und der geeignet ist, die von der Primär- auf die Sekundärseite übertragene Energie zu extrahieren und in einem Ladungsreservoir zu speichern, eine Störsignalgenenerungseinheit die die durch den Pulsgenerator hervorgerufenen Pulse verändert, und eine sekundäre Logikschaltung die von der zweiten Datenzufuhr bereitgestellten Daten für die Übertragung über das galvanisch getrennte Energie- und Datenübertragungsmodul verarbeitbar macht, und die von der Primärseite Informationen in der Gestalt des unveränderten Pulses zugeführt bekommt und die die Übertragung der an der zweiten Datenzufuhr anliegenden Daten von der Sekundärseite auf die Primärseite über das galvanisch getrennte Energie- und Datenübertragungsmodul auf Basis des unveränderten Pulses einleitet, indem diese Einleitung, aufgrund einer Abfolge unterschiedlicher Pulsdauern erfolgt

Um eine Datenübertragung sowohl von der Primärseite auf die Sekundärseite zu ermöglichen, als auch umgekehrt eine Datenübertragung sowohl von der Sekundärseite auf die Primärseite und um hierfür eine möglichst kompakte Lösung anzubieten, wird für beide Seiten nur ein einziger Pulsgenerator zur Generierung von Pulsen verwendet, wobei die Pulsdauer der unveränderte als Informationsträger dient, ob unveränderte Pulse von der Primärseite auf die Primärseite über das galvanisch getrennte Energie- und Datenübertragungsmodul übertragen werden. Darüber hinaus werden diese Pulse auf der Sekundärseite verändert, wobei dann diese Veränderung als Informationsträger dient, ob Daten in Gestalt eines Kurzschlusses sekundärseitig als zusätzliche Information von der Sckündärseite auf die Primärseite über das galvanisch getrennte Energie- und Datenübertragungsmodul übertragen werden.

Um dies zu erreichen sind die einzelnen Merkmale des unabhängigen Anspruchs 1 wie folgt ausgestaltet:
Das galvanisch getrennte Energie- und Datenübertragungsmodul in der erfindungsgeniäßen Gestalt eignet sich insbesondere zur Übertragung von Daten an einen an ein Wechselstromnetz angeschlossenen Verbraucher, wie z.B. einen Fernsehgerät oder Kühlschrank. Hierbei ist es vorteilhaft, wenn die Steuerung dieser Verbraucher sich in einem Ruhezustand befindet, bzw. ausgeschalten ist, um nicht in permanentem Stand-By Energie zu verbrauchen. Sollen derartige Verbraucher über das Wechselstromnetz mit Daten versorgt werden, muß deren Datenempfangseinheit bzw. Datenverarbeiturigseinheit erst aufgeweckt werden.

Als Übertrager mit einer Primärseite und einer Sekundärseite, wird vorzugsweise ein Trafo verwendet, da dieser eine galvanische Trennung (also als Schutztrennung) und eine bidirektionale Datenübertragung ermöglicht. Zusätzlich leistet der Übertrager einen Energietransfer von der Primär- auf die Sekundärseite.
Im übrigen können über derartige Übertrager Daten in beide Richtungen übertragen werden, sodaß der Verbraucher nicht nur mit Daten versorgt werden kann, sondern auch Daten verschicken kann. Eine Datenübermittlung in beide Richtungen wird erfindungsgemäß ermöglicht durch das in Folge ausgeführte Zusammenwirken von an der Primär- und Sekundärseite angeschlossenen funktionalen Elementen:
An der Primärseite angeschlossen sind, eine Energiezufuhr und eine erste Datenzufuhr, ein Pulsgenerator, eine Empfängervorrichtung und eine Logikschaltung.

Die Energieversorgung dient hierbei der Versorgung des galvanisch getrennten Energie- und Datenübertragungsmoduls mit Energie. Mit Hilfe der Energieüheliragung kann das sekundärseitig angeschlossene Gerät mit Energie/Ladung versorgt werden. Ein in diesem Zusammenhang genannter Übertrager arbeitet aufgrund von Streufeldern physikalisch notwendig jedoch nie verlustlos, was physikalisch notwendig zur Folge hat, daß ein Teil der zu übertragenden Energie wird an dieser Stelle vernichtet wird.

Die erste Datenzufuhr führt hierbei zur Übertragung von der Primärseite auf die Sekundärseite dem galvanisch getrennten Energie- und Datenübertragungsinodul erste Daten zu. Diese Daten können ursprünglich aus dem Stromnetz stammen, welches zur Datenübertragung genutzt wird. In Frage kommen hier als Datenübertragungen über die Stromleitungen, mit Hilfe von HF, mit Hilfe von Wirkleistungsmodulation, wie z.B. in der EP 1 675 274 beschrieben. Als Datenquellen kommen beispielsweise ein zusätzlicher externer µC via SPI/I2C o.ä. am dSID angeschlossen.

Der Pulsgenerator, der in der Lage ist, Pulse unterschiedlicher Dauer zu generieren, besteht insbesondere aus. Der Pulsgenerator ist kann auch aus einem einfachen Takterzeuger bestehen, der das Tastverhältnis von Puls zu Puls variieren kann. Gesteuert wird ein solcher Taktgenerator entsprechend der zu übertragenden Information 1 oder 0 von der primären Logikschaltung, so dass ein langer oder kurzer Puls generiert wird. Alternativ kann der Pulsgenerator beispielsweise auch aus einem festen Takt (1 - als langer Puls) und einem Monoflop (0 - als kurzer Puls) bestehen, wobei die Monoflop Laufzeit wesentlich kleiner ist, als die Einzeit des festen Taktes sein sollte. Ansteuerung und Auswahl der Taktquelle auch hier via primärer Logikschaltung.

Die Empfängervorrichtung, die die Erkennung von dem durch den Pulsgenerator erzeugten und von der Primär- auf die Sekundärseite übertragenen und auf der Sekundärseite veränderten und nach der Veränderung auf die Primärseite rückübertragenen Pulse erlaubt, besteht insbesondere aus
Der primärseitige Strompuls läuft hierfür über einen Stromsensor mit einstellbarer Ansprechschwelle. Wird ein zuvor definierter Schwellwert überschritten, dann wird für die Zeit der Überschreitung ein Statussignal gesetzt, welches der primären Logikschaltung als Eingang/zur Auswertung dient.

Idealerweise sind die Pulse Strompulse, die insbesondere von sekundärseitig bewirkten Kurzschlussereignissen hervorgerufen werden
Die primärseitige Logikschaltung muss hierbei die analoge Erkennungsschaltung freigeben bzw. zurücksetzen und einen analogseitig erkannten Strompuls in eine Bitwertigkeit überführen und diesen in ein Schieberegister eintragen und ggf. einen Interrupt nach Abschluss des Empfangs erzeugen.

Insbesondere umfasst eine primäre Logikschaltung die von der ersten Datenzufuhr bereitgestellten Daten für die Übertragung über das galvanisch getrennte Energie- und Datenübertragtingsinodul verarbeitbar macht, und die von der Sekundärseite Informationen in der Gestalt des auf der Sekundärseite veränderten Pulse zugeführt bekommt und die die Übertragung dieser an der ersten Datenzufuhr anliegenden Daten von der Primärseite auf die Sekundärseite über das galvanisch getrennte Energie- und Datenübertragungsmodul auf Basis des veränderten Pulses einleitet und die Energieübertragung steuert und einleitet. Die Logikschaltung wirkt hierbei als das bindende Element zwischen dem Pulsgenerator und der Empfängervorrichtung

Dies bedeutet für den Bertriebszustand des Sendens von Daten:
Detektiert die Logikschaltung neue Daten im Senderegister des dSC, dann triggert diese Logikschaltung den Pulsgenerator. Der Takterzeuger wird entsprechend der zu übeitragenden Informationen konfiguriert (mit Hilfe der Tastverhältnisse) oder die Quelle der Pulse wird gewählt. Es stellt sich somit eine zur Übertragenden Information korrespondierende Pulsfolge ein.

Dies bedeutet für den Bertriebszustand des Empfangens von Daten:
Ein Signaldetektor latched das Statussignal des Stromsensors der Empfängervonichtung. Damit führt ein erkannter Strompuls zu einer logischen '1' in dem Empfangsregister (Schieberegister). Wird bei einem generierten Puls kein resultierender Strompuls erkannt, weil die Sekundärseite keinen Kurzschluss durchgeführt hat, so wird dies als logische '0' interpretiert. Mit jedem generierten Puls des Pulsgenerators, wird das Schieberegister weitergeschoben und der Signaldetektor zurückgesetzt. Insbesondere m fall, daß ein bestimmter Puls (Startbit) innerhalb der Steuerbits kurzgeschlossen und als Strompuls primärseitig sichtbar wird, erfolgt auch der Übergang in den Datenempfangsmodus. Energieübertragung: Ist diese im Baustein des dSC aktiviert, dann werden in zyklischen Abständen Energiepakete gesendet Liegen keine Sendedaten vor und ist eine aktuell eingestellte Wartezeit (Zeit zwischen zwei Energie- oder Datenpaketen gemäß Registereinstellung im dSC) verstrichen, so wird ein Energiepaket gesendet. Hierzu wird wieder der Pulsgenerator angesteuert. Die Sekundärseite hat außerdem die Möglichkeit Einfluss auf die Energieübertragung zu nehmen, Hierfür werden die Steuerbits in einer bestimmten Abfolge kurzgeschlossen. Entsprechend wird die Energiezufuhr erhöht oder erniedrigt, indem der Registerwert zur Wartezeit entsprechend verändert wird.

Zusätzlich können aber nicht nur Daten von der Primär auf die Sekundärseite übertragen werden, sondern auch umgekehrt:
Hierfür sind an der Sekundärseite angeschlossen: eine zweite Datenzufuhr, ein kombinierter Bitempfänger mit Ladungsextraktion zur Energiegewinnung, eine Störsignalgenerierungseinhcit, eine sekundäre Logikschaltung.

Die zweite Datenzufuhr führt hierbei dem galvanisch getrennten Energie- und Datenübertragungsmodul Daten zur Übertragung von der Sekundärseite auf die Primärseite zu, wobei die zweiten Daten von den zuvor genannten ersten Daten unabhängig sind. Diese zweiten Daten können vom Verbraucher stammen, oder von einem externen Sensor, der in der Umgebung physikalische Zustände wahrnimmt. Insbesondere können sie direkt von einem an der Sekundärseite angeschlossenen µC stammen. Dieser könnte außerdem als Bridge zu anderen Systemen dienen (USB-PC etc.)

Der Bitempfänger, ist geeignet, die vom Pulsgenerator erzeugten Pulse zu empfangen und ist geeignet, unterschiedliche Pulsdauern des Pulsgenerators zu erkennen.
Der kombinierte Pulsempfänger/Ladungsextrsktor gewinnt somit aus dem sekundärseitig anliegenden Signal die primärseitig erzeugten Pulse, indem die Pulsiängen ausgemessen und ggf. mit Referenzwerten verglichen werden. Zusätzlich wird die transferierte Energie (Umladungsvorgänge des Übertragers) auf Kapazitäten durch den Ladungsextraktor gespeichert und den sekundärseitigen Verbrauchern zur Verfügung gestellt.

Die Störsignalgenerierungseinheit verändert die die durch den Pulsgenerator hervorgerufenen Pulse, indem nach dem Eintreffen eines Pulses auf der Sekundärseite des Übertragers, dieser für eine definierte Zeitspanne kurzgeschlossen wird. Als Kurzschlusselement kann im einfachsten Fall eine Transistor- Dioderikombitiation verwendet werden. Die Zeitvorgabe des Kurzschlusses kann beispielsweise durch ein Monoflop vorgegeben sein, oder durch einen variablen Zähler bestimmt werden. Beim Kurzschlussereignis muss darauf geachtet werden, dass eine maximale Kurzschlusszeit nicht Überschritten wird. Nachfolgende Pulse müssen weiterhin eingehen und erkannt werden können. Zudem darf das Kurzschlussereignis nicht zu einer Entleerung des sekundärseitigen Energiespeichers führen.

Im hinterlegten Protokoll ist hierbei definiert, welche Bits mit Hilfe einer z.B. Unterbrechung gestört werden dürfen und welche Status- und Steuerinformationen enthalten. Die Sekundärseite muss daher die Bits abzählen. Sie wartet daher zunächst auf das Eintreffen eines Pulses. Wenn dieser sicher anliegt, dann erfolgt der Störvorgang.

Eine Übertragungseinheit beinhaltet diese Status-/ und Steuerinformationen sowie die Nutzdaten.
Am Beispiel von Statusinfonnation aufgezeigt kann die Primärseite der Sekundärseite den Übertragungsmodus mitteilen (Daten- oder Energieübertragung)
Am Beispiel von Steuerinformationen (Anm. Je nach Vereinbarung können die Steuerinformationen auch für die Sekundärseite bestimmt sein) aufgezeigt kann beispielsweise die Sekundärseite der Primarseite mitteilen, dass genug/zu wenig Energie übertragen wurde und die Abstände der Energiepakete nun verlängert/verkürzt werden können.
Auch kann die Sekundärseite die Primärseite in den Empfängsmodus versetzen wenn Sendedaten vorliegen - durch Kurzschließen des Startbits

Am Beispiel der Nutzdaten aufgezeigt kann ein Datenbyte die Information umfassen, dass die Sekundärseite diese selber verarbeitet, oder diese an die Geräte (TV, Radio, etc.) weitergibt.
Die Abfolge hierbei lautet: n-Statusbits, m Steuerbits, x Datenbits.

Diese Veränderung, bzw. Störung wird eingeleitet von einer primärseitig generierten Startsequenz, die eine Störsignalsequenz erzeugt und damit eine Informationsübertragung von der Sekundärseite auf die Primärseite einleiten kann.
In der Folge werden dann zweite Daten in der Gestalt von Steuer- oder Nutzdaten von der Sekundärseite auf die Primärseite durch die beschriebenen z.B. Kurzschlussereignisse übertragen.
Diese Nutzdaten werden auf der Primärseite weiterverafbeitet oder an andere Instanzen im angeschlossenen Netzwerk weitergegeben.
Steuerinformationen haben hierbei einen direkten Einfluss auf die Funktionalität der Primärseite hinsichtlich der Übertragung. So kann z.B. die Energiezufuhr über den Übertrager reguliert werden, indem zwischen zwei Energie- oder Datenpaketen eine einstellbare / variable Pause gemacht wird.

Die sekundäre Logikschaltung die von der zweiten Datenzufuhr bereitgestellten Daten für die Übertragung über das galvanisch getrennte Energie- und Datenübertragungsmodul verarbeitbar macht, und die von der Primärseite Informationen in der Gestalt des unveränderten Pulses zugeführt bekommt und die die Übertragung der an der zweiten Datenzufuhr anliegenden Daten von der Sekundärseite auf die Primärseite über das galvanisch getrennte Energie- und Datenübertragungsmodul auf Basis des unveränderten Pulses einleitet, indem diese Einleitung, aufgrund einer Abfolge unterschiedlicher Pulsdauern erfolgt, während

Die Funktion der Logikschaltung der Sekundärseite ist beim Senden von Date wie folgt:
Liegen neue Daten in einem Senderegister auf der Sekundärseite oder wurde ein an der Sekundärseite angeschlossenener Lokaltaster betätigt, dann wird auf das Eintreffen primärseitig generierter und über den Übertrager auf die Sekundarseite Übertragene Pulse gewartet und ist im Ablauf ein unterbrechbarer Puls erreicht, triggert die Logikschaltung die Störsignalgenerierungseinheit. In der Folge wird das Senderegister auf die Primärseite übertragen.

Die Funktion der Logikschaltung der Sekundärseite ist Empfangen Senden von Date wie folgt:
Die durch den Bitempfänger resultierenden Bitwertigkeiten werden durch die Logikschaltung in ein Empfangsregister eingetragen bzw. je nach Art der Information werden Aktionen ausgelöst: z.B. Daten an Gerät via SPI senden, GPIOs setzen o.ä. Energieregulierung:
Weiterhin überwacht die Logikschaltung mit Hilfe einer analogen Komparatorschaltung die Spannung über dem Speicherelement. (Kapazität). Wird ein Schwellwert unterschritten bzw. überschritten, dann wird die korrespondierende Steuerinformation auf die Primärseite übertragen und so eine Regulierung der Energiezufuhr erreicht (mehr/weniger Energie zugeführt).

Die mit Hilfe eines z.B. sekundärseitig erzeugten Kurzschlusses verursachte Veränderung bewirkt für sich alleine betrachtet, das hierdurch ein Informationsteil von der Sekundärseite auf die Primärseite übertragen wird. Innerhalb dieses Kontextes ergibt sich dann eine gültige Information für die Primärseite. D.h. indem Teile der Startsequenz in kurzgeschlossen werden, wird auf der Primärseite eine entsprechende Reaktion bewirkt.

Innerhalb einer sekundärseitig kurzgeschlossenen Startsequenz ist dann auch die Information zur Regulierung der zeitlichen Aufeinanderfolge zweier Energiepakete gekapselt. Nach der Startsequenz können dann zusätzlich Nutzdaten angereiht werden. Diese können je nach vorliegendem Fall von der Sekundärseite dann ausgewertet werden oder, falls die Startsequenz in einer bestimmten Weise kurzgeschlossen worden ist, durch ein weiteres Kurzschließen der folgenden Pulse für eine Nutzdatenübertragung auf die Primärseite.

Im übrigen gelten folgende Definitionen:
Statusbits: Energie-/Datenindikator, PHW (Nulldurchgang Netz Sekundärseite), + weitere Statusinformationen des primären Seite.
Steuerbits: Startbit (Einleitung Datenübertragung sek. auf prim.), 1-2Bits zur Steuerung der Energieübertragung, + weitere Bits für mögliche Steuerinformationen der prim. oder sek. Seite
Datenbits: mindestens 8 Datenbits (Nutzdaten)
Unter "Startsequenz" wird eine Zusammenfassung aus Statusbits und Steuerbits verstanden.

Ein derartiges galvanisch getrenntes Energie- und Datenübertragungsmodul, bei welchem die primäre Logikschaltung, aufgrund der Gestalt von den Bitmustern entscheidet, ob die Übertragung von reinen Energiepaketen mit einem variablen Daten-/Pausenverhältnis gesteuert/angepasst werden muss oder ob die empfangene Bitmustersequenz einer zu verarbeitenden Dateninformation entspricht, bewirkt dass die empfangenen Nutzdaten primärseitig weiterverarbeitet/weitergegeben werden können bzw. der Sicherstellung der Energieversorgung der Sekundärseite dienen können.

Die hierbei herangezogenen Bittmuster werden durch Auswertung einer Komperatorschaltung durch den Logikblock generiert und in entsprechende Steuerbits umgesetzt.
Die hierbei herangezogenen Bittmuster in Gestalt einer Startsequenz besteht aus: n-Statusbits, m Steuerbits. Danach folgt die Datensequenz (Nutzdaten). Zur Regulierung der Energieübertragung müssen nun die Steuerbits in einer geeigneten Abfolge kurzgeschlossen werden, so dass die Primärseite die Energieübertragung entsprechend nachregeln kann.

Die hierbei zusätzlich zur natürlicherweise bei einer Datenübertragung übertragene Energie stammt von der Primärseite und insbesondere aus dem Ladungsvorrat des dSID.

Diese Energie wird in Energiepaketen, die vorzugsweise die Gestalt eines Bit/Pulsmusters aufweisen und vorzugsweise zur Energieübertragung flexibel einstellbar sind. Das Startbit muss ja immer '1' sein. Vorzugsweise sollten möglichst viele Bits zu '1' gewählt werden. Denkbar ist zur Optimierung der Energieübertragung auch ein speziell gewähltes Tastverhältnis.
Die Energiepakete gleichen im strukturellen Aufbau hierbei vorzugsweise den Datenpakten. Damit wird die Daten- /Energieübertragung vereinheitlicht und damit leichter handhabbar. Zudem kann dann über eine regulierbare Pause zwischen zwei Übertragungspaketen die Energieübertragung auf die Sekundärseite moderiert werden.

Eine Anpassung / Steuerung eines variablen Daten-/Tausenverhältnisses ist notwendig, wenn die Übertragung von Energiepakten in einem bestimmten Zyklus bewirkt, dass die Sekundärseite mit Energie versorgt ist. Eine Regulierung ist darüber hinaus notwendig, wenn jede weitere zusätzliche Portion sekundärseitig vernichtet werden müsste oder sekundärseitig zu wenig Ladung vorhanden ist und eine Unterversorgung droht. Optimierung der Effizienz!

Ob die empfangene Bitmustersequenz einer zu verarbeitenden Dateninformation entspricht, also Nutzdaten entspricht, oder nicht ist daran erkennbar, daß das Startbit kurzgeschlossen worden ist.

Ein derartiges galvanisch getrenntes Energie- und Datenübertragungsmodul, bei welchem die durch die Störsignalgenerierungseinheit veränderten Pulse durch einen Kurzschluß verändert werden, bewirkt den zuvor bei der der Beschreibung der Störsignalgenerierungseinheit beschriebenen Effekt.
Hierbei kann dieser Kurzschluß aus mehreren Kurzschlußereignissen oder ähnlichen Vorkommnissen bestehen.

Ein derartiges galvanisch getrenntes Energie- und Datenübertragungsmodul bei welchem auf Basis des veränderten Pulses von der Energiezufuhr Energie von der Primärseite auf die Sekundärseite des Übertragers übermittelt wird, bewirkt, daß auf der Sekundärseite zusätzliche Energie bereitgestellt werden kann, beispielsweise um eine Vorrichtung (z.B. eine Datenverarbeitungsvornchtung) aus dem Standby-Modus aufzuwecken. Eine weitere Wirkung ist, daß sparsame Bauteile (µC/Sensoren o.ä.) direkt und permanent oder gepulst zu betreiben sind.

Die zusätzliche Energiezufuhr von der Primärseite auf die Sekundärseite des Übertragers wird hierbei vorteilhafterweise durch eine vordefinierte Pulssequenz bewirkt. Eine derartige Pulsfrequenz hat eine Gestalt, um möglichst viele lange Pulse zu generieren, wie zuvor im Rahmen des angepassten Tastverliältnisses beschrieben.

Ein derartiges galvanisch getrenntes Energie- und Datenübertragungsmodul bei welchem das Störsignal ein Kurzschluß ist, der geeignet ist, die durch den Puls übertragene Information zu neutralisieren, bewirkt, daß zwar die ursprüngliche Information für die Sekundärseite verloren geht, jedoch für die Primarseite eine neue Information infolge des Strompulses entsteht.
Weiterhin stellen die Auswirkungen des auf die Primärseite übertragenen Kurzschlusses für die Primärseite eine neue Information dar, wodurch es nicht nötig ist, einen zweiten Pulsgenerator an der Sekundärseite vorzusehen.

Ein derartiges galvanisch getrenntes Energie- und Datenübertragungsmodul bei welchem unabhängig von den mit der Datenübertragung übertragenen Energiebetrag ein zusätzlicher Energiebetrag von zwischen um die 100mW und um ein Watt übertragen wird, bewirkt, daß hierdurch eine zusätzliche Energieversorgung der Sekundärseite ermöglicht wurde, die logisch an die von der Primärseite auf die Sekundärseite zu übertragenen Daten gekoppelt ist. Bevorzugt ist ein Bereich von 100uW bis um die 500mW. Besonders bevorzugt sind einige wenige mW.

Ein derartiges galvanisch getrenntes Energie- und Datenühertragungsmodul, bei welchem zur Energieübertragung auf der Primärseite weniger als um die 26 Volt und insbesondere weniger als um die 6 Volt und an der Sekundärseite weniger als insbesondere um die 3,3 Volt anliegen, bewirkt eine effiziente sekundätseitige Energieversorgung vieler diskreter Bauteile (µC, FPGAs, LEDs, Logikgatter, Sensoren , AD/DA-Wandler, Kommunikations-ICs etc.)

Ein Übertrager eines derartigen galvanisch getrennten Energie- und Datenübertragungsmoduls weist vorzugsweise ein Winduugsverhältnis von zwischen 1 und 15 auf. Dieses Übertragungsverhältnis ist besonders vorteilhaft, weil in diesem Bereich die Energie- und Dateneffizienz für die angestrebten Betriebsbedingungen maximal/optimal werden kann

Ein ganz besonders bevorzugtes Windungsverhältnis beträgt um die 6:9, weil hierdurch
bei ca. 2MHz Übertragungsmodus eine gute Datenübertragung bei kleinen Übertagerdimensionen gewährleistet ist und zusätzlich eine rudimentäre Energieübertragung gewährleistet werden kann.

Ein derartiges galvanisch Energie- und Datenübertragungsmodul bei welchem die Energieübertragung mit Hilfe einer Frequenz in einem Bereich von um die 100KHZ bis um die zwei Megahertz erfolgt, bewirkt, daß in diesem Bereich und insbesondere bei um die 2MHz Übertragungsmodus eine gute Datenübertragung bei kleinen Übertragerdimensionen gewährleistet ist und zusätzlich eine rudimentäre Energieübertragung gewährleistet werden kann.

Ein derartiges galvanisch getrenntes Energie- und Datenübertragungsmodul bei welchem die Pulsdauer zur Einleitung der Datenüberragung von der Sekundärseite auf die Primärseite kürzer ist, als die zur Einleitung der Datenüberragung von der Primärseite auf die Sekundärseite, daß die Einleitung der Datenübertragung von der Sekundärseite auf die Primärseite nicht nur an die veränderte Pulsdauer, sondern an ein Kurzschlussereignis gebunden sein kann.

Die Aufgabe wird weiterhin gelöst durch ein Verfahren zum Betreiben eines der beschriebenen galvanisch getrennten Energie- und Datenübcrtragungsmodule umfassend die Schritte.
➢ Primärseitige Generierung eines Datenwortes, bestehend aus einer Startsequenz und Nutzdaten, und/oder Energiedaten
➢ Übertragung des der Startsequenz, umfassend ein Startbit von der Primär- auf die Sekundärseite des Übertragers
➢ Erkennung der Startsequenz
➢ Fakultatives Verändern der Startsequenz auf Basis von sekundärseitig eingeführten zweiten Daten, abhängig vom
➢ Erkennen, dass ein Bedarf besteht, Daten von der Sekundärseite auf die Primärseite zu übertragen,
➢ Erkennen, ob für die Datenübertragung genügend Energie auf der Sekundärseite vorhanden ist,
➢ Falls nicht sekundärseitig nicht genügend Energie vorhanden ist, primärseitige Einstellung der für eine Datenübertragung sekundärseitig benötigten Energie,
➢ Erkennen, daß der Bedarf Daten von der Primärseite auf die Sekundärseite zu übertragen durch ein sekundärseitig aufgetretenes Sonderereignis, und Übermitteln dieses Sonderereignisses auf die Primärseite,
➢ Einleiten der Energieübertragung von der Primärseite auf die Sekundärseite
➢ Einleiten der Datenübertragung von der Primärseite auf die Sekundärseite.

Hierdurch wird bewirkt, daß die Primärseite als Master wirkt. Dieser sendet Daten über den Übertrager auf die Sekundärseite. Diese kann die Sekundärseite dann verarbeiten. Möchte jedoch die Sekundärseite etwas zum Master, also auf die Primärseite senden, dann ist das sekundärseitige Kurzschließen der primärseitig generierten und über den Übertrager übertragenen Pulse notwendig. Die Module auf der Primär- und Sekundärseite sind erfindungsgemäß nicht identisch, sondern arbeiten nach unterschiedlichen Arbeitsweisen. Im Gesamtsystem ergibt sich dann eine funktionierende bidirektionale Nutzdatenübertragung.
Die Sekundärseite braucht Energie, damit diese überhaupt funktioniert. Jeder Daten-/Enetgietransfer leistet hierzu einen Beitrag. Entscheidend ist die verfahrensmäßig zeitlich definierte Aufeinanderfolge der Daten- /Energiepakete.

Vorteilhafte Ausgestaltungen gehen aus den Fig. hervor.

Hierbei zeigen:
Fig. 1 das Blockdiagramm einer "UDI-Schnittstelle"
Fig. 2 die Simulation count 10
Fig. 3 den Empfangsmodus des dSC,
Fig. 4 den Sendemodus des dSC;
Fig. 5 die UDI-SPI Schnittstelle;
Fig. 6 den Daten- (MOSI) und Taktsignal (SCK);
Fig. 7 die Übertragnngsrichtung SPI-Controller ⇒ dSC11,
Fig. 8 den Ablaufdiagramm UDI:
Fig. 9 einen UDI Interface -Baustein;
Fig. 10 eine UDI Applikation.

Erfindungsgemäß ist es möglich, eine bidirektionale Kommunikation und eine Energieübertragung zu realisieren. Im Rahmen der Implementierung ist hervorzuheben, dass der bestehende Sende-/Empfangsmodus nicht verändert wird. Notwendige Änderungen zur Realisierung des Dauersendens können mit minimalem Aufwand auf Basis einer bereits vorhandenen und funktionstüchtigen Implementierung stattfinden.

Der SPI-Kompatibilitätsmodus bewirkt, daß die Umschaltung zwischen einem 8- und 10 Bit Verfahren möglich ist. Des weitem wird das Statusbit UDICOL in das Interruptregister verschoben, wobei das Übcrtemperaturflag den freien Platz im Statusregister STATUSI eingenommen hat.
Im 10-Bit Übertragungsmodus wird das Energie-/Datenubertragüngsbit an die erste Bitsteile vorgezogen. Diese Maßnahme ermöglicht frühzeitig eine Unterscheidung zwischen Daten-und Energieubertragungsmodus.

Die Wahl zwischen 1MHz und 2MHz Übertragungsrate dient in Folge primär einer Berücksichtigung systembedingter zeitliche Verzögerungszeiten, so dass bei langen Signallaufzeiten in den 1MHz- Modus gewechselt werden kann, Die Änderungen des Energieübertragungsbit im 8-Bit SPI-Modus und das Verschieben des E/D-Bits an die erste Übertragungsposition im 10-Bit-Modus sind Optimierungen hinsichtlich einer schneller Unterscheidbarkeit zwischen Energie- und Datenübertragung. Die Einführung des 10-Bit Dauersendemodus mit automatischem Wiedereinschalten soll einer Unterversorgung der Geräteseite vorbeugen.

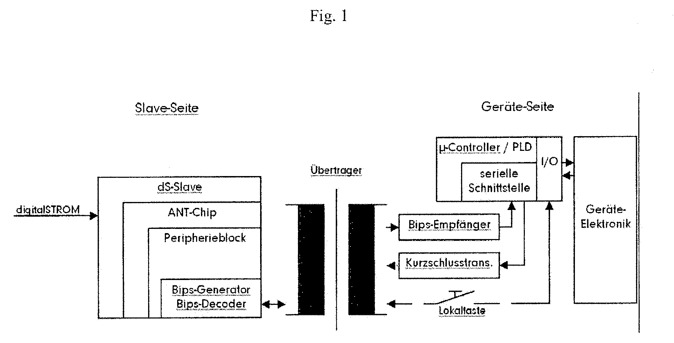

Das erfindungsgemaße galvanisch getrenntes Energie- und Datenübertragungsmodul wird in Fig. 1 am Beispiel eines Blockdiagramms einer "UDI-Schnittstelle" gezeigt. UDI steht als Abkürzung hierbei für "Universal Device Interface."

UDI wird für beispielsweise als digitalSTROM-Geräteschnittstelle eingesetzt, die eine galvanisch getrennte Anbindung komplexer Geräte wie z.B. Haushaltsgeräte an den digitalSTROM ermöglicht. Dabei wird ein hochfrequentes Prinzip ausgenutzt, mit dem eine bidirektionale Datenübertragung potentialfrei über einen kleinen Transformator möglich ist. Dieser Übertrager kann ohne zusätzliche Bauteile primärseitig an einen "dSC" angeschlossen werden.

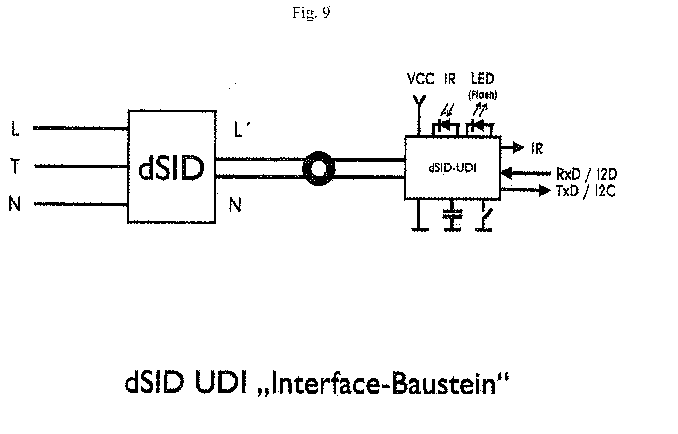

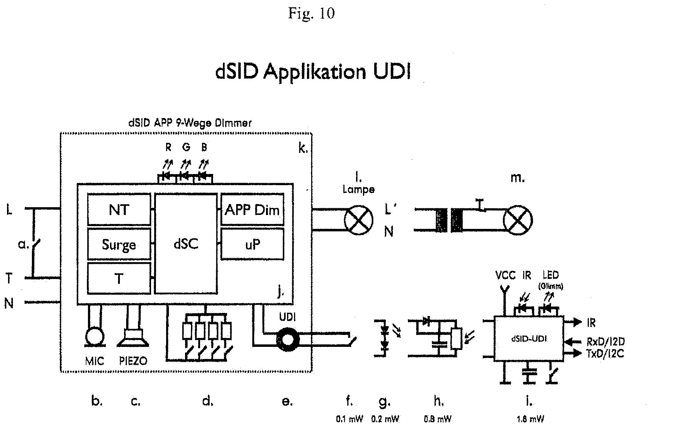

Fig. 9 und 10 zeigen weitere Blockschaltbilder des UDI, ohne aber die
- RxD/I2D/SPI_In (MISO)
- TxD/I2C/SPI_Out (MOSI, SCK, CS)
- PHW: Anzeige des Netz-Nulldurchgangs (Zero Crossing - ZC) auf der dSID-Seite
- 1 bis 4 GPIO Ausgänge (INTR, WakeUp/Sleep, etc.)
- VCC IN/OUT (externe Einspeisung oder externe Versorgung angeschlossener Komponenten)
   zu zeigen,

Eine Kommunikation ist hierbei in drei Ausbaustufen möglich, die jeweils sekundärseitig unterschiedlichen Aufwand erfordern:
1. Taster bzw. Schaltkontakt (Ein/Aus)
2. Schieberegister mit Zusatzbeschaltung für eine unidirektionale Kommunikation mit 8 Bit
3. Komplexe Interface-Logik zum bidirektionalen Transfer und Signalumwandlung in verschiedene Formate

Der Übertrager wird hier favorisiert eingesetzt, da dieser mit geringem Energieverbrauch bidirektional Informationen übertragen kann und darüber hinaus sich zum Energietransfer eignet. Da sich hierbei jedoch keine statischen Pegel übertragen lassen, sind Schaltungen zur Erzeugung von kurzen Impulsen geboten, die auf der Gegenseite wieder decodiert werden müssen. Die Hardware zur Ansteuerung des Übertragers ist hierbei komplett in den dSC integriert.

Zur Übertragung von Daten wird folgendes Übertragungsverfahren genutzt:
dSC ⇒ Gerät, also primär nach sekundär: Beispiel für 2 M HZ Mode
   Die Übertragung vom dSC auf die Geräteseite erfolgt vorzugsweise mit unterschiedlich langen Impulsen für 0-Bits (kurzer Impuls, ca. 70ns) oder 1-Bits (langer Impuls, ca. 250ns). Die Impulse können über einen Monoflop auf der Geräteseite unterschieden werden und damit entsprechend in ein Schieberegister geladen werden. Die Impulse dienen dabei gleichzeitig als Takt.
Gerät ⇒ dSC, also sekundär nach primär, Beispiel für 2MHz Mode
   Das Gerät kann Daten zum dSC senden, indem der dSC z.B. lange Impulse (z.B. einen) erzeugt, während das Gerät den Übertrager auf der Geräteseite kurzschließt oder offen lässt. Schließt das Gerät den Übertrager kurz, erzeugt der transformierte Kurzschluss auf der dSC-Seite einen Stromimpuls, der als 0-Bit interpretiert wird. Die vom dSC erzeugten Impulse dienen gleichzeitig als Sendetakt für das Gerät, d.h, auf der Geräteseite genügt ein Schieberegister.

Hierbei ergibt sich folgender Ablauf der Übertragung aus Sicht der dSC-Software:

### 1. Senden (Daten von dSC ⇒ Gerät)

➢ Datenregister mit Sendedaten (dSC⇒ Gerät) laden (Daten werden automatisch an das Gerät gesendet)
➢ Kollisionsflag abfragen
➢ Wenn Flag gesetzt, wurden Daten vom Gerät empfangen ⇒ Empfangsdaten aus Datenregister lesen
➢ Senden wiederholen, wenn nötig

### 2. Empfangen (Pollen, Daten von Gerät ⇒ dSC)

➢ Datenregister mit 0xFF laden
➢ Kollisionsflag abfragen
➢ Wenn Flag gesetzt, wurden Daten vom Gerät empfangen ⇒ Empfangsdaten aus Datenregister lesen

Ein kompletter fehlerfreier Zyklus erfordert damit drei Zugriffe inkl. Abfrage des Kollisionsflags

Hierbei ergibt sich folgender Ablauf der Übertragung aus Sicht der Geräte-Software:
Das Gerät wartet auf ein Startbit. Möchte es Daten zum dSC übertragen, schließt es das Startbit sofort kurz und sendet seine Daten, gefolgt von einem Stoppbit. Hat das Gerät keine Daten, empfängt es die auf das Startbit folgenden Sendedaten vom dSC.

### Telegrammaufbau:

Der aktive Teil (Master) ist hierbei immer der dSC_{.}
Durch Schreiben in das UDITX-Register (8-Datenbits; 0x30) startet die Übertragung vom dSC zum Gerät automatisch.

Folgendes Telegrammformat wird verwendet:
PS DDDD DDDD
S = Start-/Kollisionsbit
D = Datenbits Reihenfolge
P = Stopp-/Energieübertragungsbit

Möchte die Geräteseite Daten an den dSC senden, so muss diese das Startbit kurzschließen. Der dSC bricht den Sendevorgang ab und sendet neun weitere logische 1-Impulse, die wiederum von der Geräteseite kurzgeschlossen werden können, so dass ein gültiges Datenwort übertragen werden kann.

Folgende Bits/Register betr. des dSC werden hierbei von der UDI-Schnittstelle genutzt:
➢ Bit UDICOL (0x3d<7>) - Startbit/Kollisionsbit
➢ Bit UDIACK(0x3d<6>) - Stoppbit/Energieübertragungsbit
➢ Register UDITX (0x30) - vom dSC empfangene Daten
➢ Register UD1RX (0x31) ∼ vom dSC empfangene Daten

Hierbei ist die UDI-Schnittstelle auch in der Lage, eine bidirektionale Datenübertragung zur Verfügung stellen und zusätzlich der Geräteseite mit Energie versorgen. Hierbei bleibt das geschilderte Übertragungsverfahren erhalten.

Diese Erweiterung ermöglicht insbesondere zwei Betriebsmodi:
1. Sende-/Empfangsmodus - entspricht dem zuvor beschriebenen Verfahren
2. Scnde-/Empfangsmodus mit kontrolliertem Dauersenden - automatischer Abbruch des Dauersendens beim Übergang in den Sende-/Empfangsmodus

Zusätzlich zu den beschriebenen Funktionen ist ein optionaler 8-Bit SPI-Kompatibilitätsmodus integriert. Zur Erhöhung der Betriebssicherheit im Dauersendemodus wird das Statussignal UDICOL als Interrupt ausgegeben.

Darüber hinaus ist noch folgender Funklt8onsumfang integriert:
➢ 8-Bit-Modus: Energieühertragungsbyte wahlweise 0x7f oder 0xff.
➢ 10-Bit-Modus: E/D-Indikatorbit (ehemals ACK-Bit) vor das Startbit schieben
➢ Wählbarer 1MHz/2MHz Betriebsmodus
➢ Wählbarer Energieübertragungsmodus - permanent, oder mit "Stop"- Funktion nach einem Sende- oder Empfangsereignis

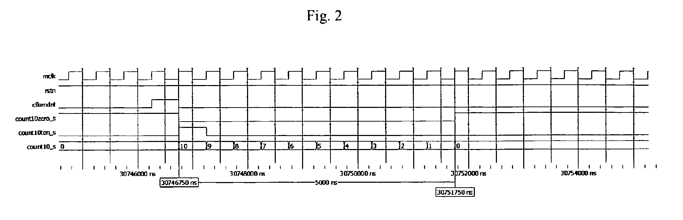

Die UD1-Sctmittstelle besteht wie aus Fig. 2 hervorgeht vorzugsweise aus folgenden I/O-Ports:
MCLK ⇒ globale Clock - Eingang; immer 2MHz!
RSTN ⇒ globaler Reset
ClkEnDat ⇒ Enable-Signal Datenregister - Daten sollen gesendet werden
WRVAL ⇒ 8-Bit Dateneingang
SLR ⇒ serieller Dateneingang - Slave Receive Bit
RDval ⇒ 8-Bit Datenausgang
UDIST ⇒ 2-Bit Statusausgang
SSS ⇒ serieller Datenausgang - Slave Send Short Bit (0-Bit)
SSL ⇒ serieller Daten- bzw. Empfangstakt-Ausgang Slave Send Long Bit (1-Bit)

Die Port-Schnittstelle "UDI" besteht darüber hinaus vorzugsweise aus folgenden drei Prozessen:
1. Count_10 - Abwärtszähler
2. PSI - Parallel-Seriel-Interface
3. Send_Empf_logic - Sende-/Empfangslogik

Fig. 2 zeigt hierbei eine Übersicht über das zeitliche Verhalten des Counter_10 - Abwärtszahlers, sowie Grundlagen hierzu:
Mit einem ClkEnDat-Impuls zählt der Funktionsblock ,.Counter_10" von 10 abwärts nach 0. Wird der Zählerstand 0 erreicht, bleibt der Zähler stehen. Eine Reaktivierung erfolgt mit dem nächsten ClkEnDat-Impuls durch ein erneutes Beschreiben des UDITX-Registers. Die Signale count10zero_s rund count10ten_s werden in Abhängigkeit vom Signal count10_s gesetzt und zeigen an, ob der Zähler 0 oder 10 ist. Genutzt werden diese Signale durch die Funktionsblöcke PSI und Send_Empf_logic.

### Parallel-Seriel-Interface PSI:

Der PSI Funktionsblock besteht in der Hauptsache aus einem 10-Bit Schieberegister. Im Sendefall, werden die Sendedaten parallel durch WRAL geladen, das Start- und Stoppbit wird gleich 1 gesetzt. Über das Signal "regout_s" kann das Schieberegister seriell ausgelesen (MSB ⇒ LSB) werden. Solange "count10zero_s /= 1" ist, erfolgt eine "UND"-Verknüpfung des Schieberegister mit SLR gleich 0 und der erforderliche Bit-Shift wird vorgenommen. Im Empfangsfall wird das vom Gerät gesendete Datenpaket via SLR gleich 0/1 seriell in das Schieberegister geladen, indem wiederum eine logische ..UND"-Verknüpfung durchgeführt wird. Am Ende der Übertragung sind das Start- und Stoppbit am Port "UDIST" und die empfangenen Daten am Port "RDVAL" zugänglich.

### Sende-Empfangslogik:

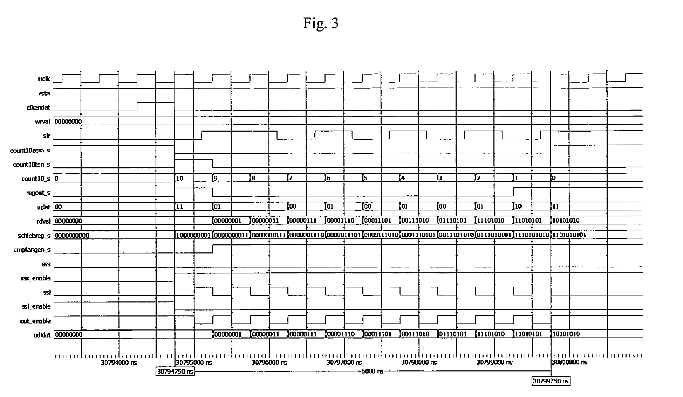

Aufgabe der Sende-Empfangslogik ist das Erkennen des Betriebsmodus der UDI-Schnittstelle. Versucht das Gerät Daten zum Master zu senden, wird dies am Start-/Kollisionsbit erkannt. Wird dieses geräteseitig kurzgeschlossen (hier, SLR gleich 1, wenn count_10ten_s gleich 1 ist), so erfolgt eine Umschaltung in den Datenempfangsmodus. Dazu werden durch den dSC "1"-Impulse via SSL gesendet, die vom Gerät wiederum kurzschlossen werden können. Durch diese Prozedur werden die gewünschten Daten auf die Primärseite übertragen. Die SSL-Impulse markieren zusätzlich den Übertragungstakt. In der Simulatiollsabbildung (Fig. 3) wird das Kurzschließen der Geräteseite durch den Eingangsport SLR repräsentiert. Insgesamt wurde das Bitmuster SLR = 1 10101010 1 verwendet. Dies bedeutet, dass das Start-/Kollisionsbit und das Stoppbit kurzgeschlossen wurden. Das vom dSC empfangene Datenwort steht in RDVAL.
Wird das Stan-/Kollisionsbit gerateseitig nicht kurzgeschlossen, können die im Schieberegister geladenen Daten des Registers UDITX gesendet werden. Ist das Signal regout_s gleich 1 wird ein 250ns-Impuls am Ausgang SSL ausgegeben. lst regout_s gleich 0 wird ein 250ns-Impuls am Ausgang SSS generiert. Im analogen Bereich wird ein SSS Impuls auf ein Monoflop gegeben und in einen 70ns Impuls gewandelt und über die UDI-Schnittstelle ausgegeben, während der SSL-Impuls zeitlich 1:1 übertragen wird.

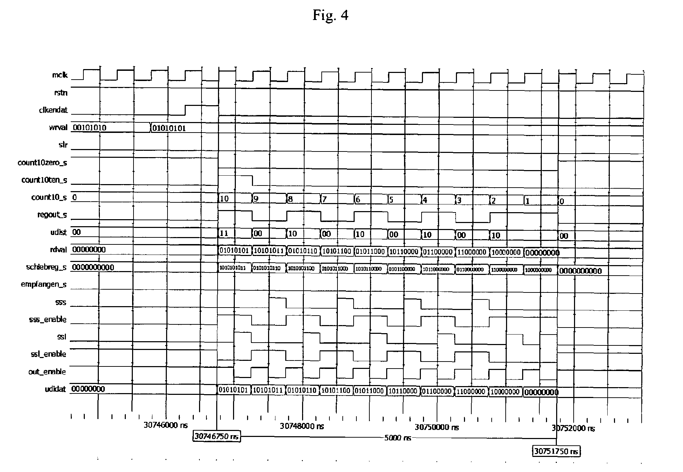

In Fig. 4 wird dieser Zusammenhang im Sendemodus verdeutlicht. Als Sendemuster wurde 01010101 in das Register UDITX geschrieben. Das Start-/Kollisionsbit und das Stoppbit werden standardgemäß gleich 1 gesetzt. Es ist zu erkennen, dass das Schieberegister zu Beginn geladen und während der Übertragung sukzessive mit Nullen autgefüllt wird.

Dauersenden, Kompatibilitätsmodus und Interruptgenerierung:
Durch die Wahl eines Übertragers kann Energie von der Primärseite auf die Sekundärseite übertragen werden. Es wird vorzugsweise ein Ringkern vom Typ FT37-43 mit einem Windungsverhältnis von 6:9 verwendet, der eine gute Datenübeliragungsqualität erreicht. Ziel ist es, mit Hilfe dieser Konfiguration ausreichend Energie auf die sekundäre Seite zu transferieren, so dass die Versorgung eines UDI-Interface-Chips sichergestellt werden kann. Praktikabel erscheint eine Sende-Wiederholungsrate von mindestens 10kHz, damit eine signifikante Energiemenge übertragen wird.

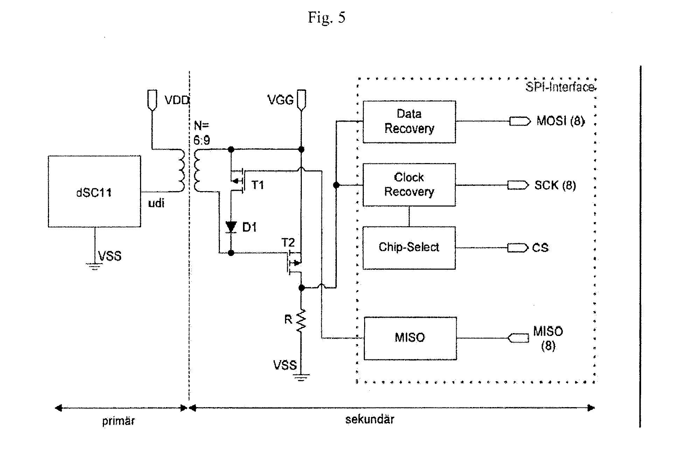

Aus Kompatibilitätsgründen ist ein optionaler 8-Bit Datenübertragungmodus eingeführt, so dass hiermit auch eine Kopplung an serielle Bussysteme (hier SPI) durch den Einsatz weniger externer diskreter Bauteile möglich wird. Der Einsatz eines PLDs ist ebenso denkbar. Das nachfolgende vereinfachte Blockdiagramm in Fig. 5 zeigt die prinzipielle Funktionsweise dieser UDI-SPI-Schnittstelle.

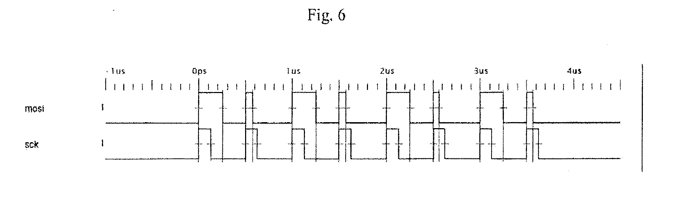

Im SPI-Betriebsmodus überträgt der dSC11 lediglich die 8 Datenbits des Registers UDITX. Sekundärseitig wird aus dem übertragenen Signal die Takt- und Dateninformation zurückgewinnen (T2, Data- und Clock-Recovery). Dabei ist zu beachten, dass die Impulsbreite des zurückgewonnenen Taktes größer ist, als die eines kurzen Bits (vgl. Fig. 6).

Zum Datenempfang wird der SPI-Slave (z.B. SC23) im "SPI-MODE1" betrieben. In diesem Modus wertet der SPI-Slave die Daten auf der fallenden Taktflanke aus. Somit ist eine Unterscheidung zwischen einem langen (1-Bit) und kurzen (0-Bit) gewährleistet. Optional kann mit Hilfe des Taktsignals SCK zusätzlich ein Chip-Select-Signal generiert werden, insofern dies für die Geräteseite erforderlich ist. Für die Kommunikationsrichtung vom SPI-Controller zum dSC 11sind Besonderheiten zu beachten.

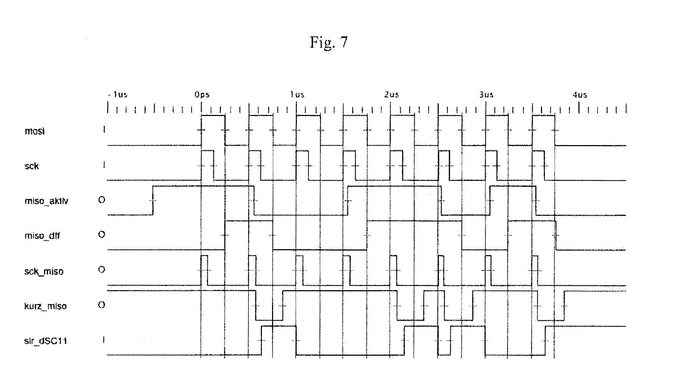

Fig.7 zeigt die Übertragungsrichtung SPI-Controller => dSC11 und veranschaulicht bildlich die folgenden Zusammenhänge:
Durch die Wahl des Betriebsmodus "SPI-MODE1" auf der Slaveseite, legt dieser das erste Ausgabedatum mit der steigenden Flanke des CS-Signals auf die MISO-Leitung (miso aktiv). Die weiteren Daten werden mit der steigenden Flanke des SCK-Signals inklusive einer zeitlichen Verzögerung durchgeschoben. Das MISO-Ausgabesignal ist für die direkte Ansteuerung des Kurzschlusstransistors T1 ungeeignet und muss entsprechend umgeformt werden. Dazu wird das MISO-Signal um einen halben Datentakt verschoben, in dem es auf der fallenden Flanke des MOSISignals durch ein D-FF übernommen wird (miso_dff). Weiterhin sind für die Umformung folgende Anforderungen zu berücksichtigen.
1. Taktrückgewinnung muss möglich bleiben
2. Kurzschluss muss bis zum nächsten Low-Pegel des MOSI-Signals gehalten werden

In der vorliegenden Lösung werden die beiden Anforderungen dadurch eingehalten, dass ein zusätzlicher Takt (sck_miso) generiert wird, dessen High-Impuls kleiner als 100ns ist. Auf der fallenden Flanke dieses Impulses wird das verschobene MISO-Signal über ein Monoflop invertiert auf den Kurzschlusstransistor gegeben (kurz_miso). Nach Ablauf der Monoflopzeit (>250ns), wird T2 wieder geöffnet. Danach kann entsprechend dem Signal miso_dff ein erneutes Betätigen des Kurzsehlusstransistors erfolgen. Das Signal slr_dSC11 zeigt das primärseitige Eingangssignal des Digitalteils.

Durch das Startbit und die Notwendigkeit der Verschiebung bleiben letztendlich 6 Nutzdatenbits übrig. Zur Vereinfachung einer möglichen externen Anpassungsschaltung sollte eine Betriebsoption des dSC11 geschaffen werden, so dass ein Wechsel in den Empfangsmodus durch sekundäres Kurzschließen des ersten oder zweiten Datenbits möglich wird. Bleibt es bei der obigen Lösung, so ist das Kurzschließen auf dem zweiten Bit in zwingenderweise erforderlich. Diese Umschaltoption sollte nur im SPI-Kompatibilitätsmodus verfügbar sein.

Zur Funktionserweiterng wurde das Bit UDICOL in allen Übertragungsmodi als Interrupt-Auslöser implementiert. Wird in diesem Kontext das 1. Bit (bzw. das 2.Bit) durch die Geräteseite kurzgeschlossen, soll nach dem kompletten Empfang eines Datenbytes ein Interrupt generiert werden. Mit Hilfe dieser Maßnahme kann die Reaktionszeit auf ein empfangenes Datenbyte verbessert werden und trägt zur Systemstabilität im Dauersendemodus bei.

Insbesondere ergeben durch den erweiterten Funktionsumfang folgende Zustände:

8-Bit Kompatibilitätsmodus - Energieübertragung: Zur Vereinfachung der Unterschcidbarkeit zwischen Energie- und Datenbits wird ein verändertes Energieübertragungspaket im 8-Bit Modus definiert, indem das führende Bit zu "0" gewählt wird. Insgesamt wird dann das Byte 0x7f übertragen. Wahlweise soll über eine Registereinstellung zur alten Realisierung mit dem Byte 0xff zurückgekehrt werden können.

10-Bit-Übertragungsmodus: Im 10-Bit Übertragungsmodus ist eine Änderung der Bit-Reihenfolge möglich. Das E/D-Indikatorbit wird hierfür an die erste Bitstelle verschoben. Darauf folgt das unterbrechbare Startbit, gefolgt von 8 Datenbits. Diese Verlagerung des E/A-Bits ermöglicht die frühzeitige Unterscheidung von Energie- und Datenbits.

Übertragungsfrequenz: Der Betrieb des UDI-Interface erfolgt mit einem 2MHz Takt. Dieser Takt ist unveränderlich, auch wenn die externe/intrne Takteinspeisung/Taktgenerierung von 2 auf 8MHZ wechselt. Durch eine Registeroption kann somit die Möglichkeit eröffnet werden, zwischen 2 oder 1MHz als Betriebsfrequenz wählen zu können. Wie schon der 2MHz-Takt muss auch der 1MHz-Takt einen Duty-Cycle von 50% aufweisen.

Dauersenden: Durch eine Registeroption kann zwischen einer permanenten Energieübertragung und dem bisherigen Verfahren gewählt werden können. Permanent bedeutet hierbei, dass nach erfolgtem Sende- oder Empfangsereignis und einer Wartezeit, definiert durch das Register CS_UDI (0x12), der Energiemodus automatisch fortgesetzt wird. Die Wartezeiteinstellung soll weiterhin mit einer Schrittweite von 1µs erfolgen.

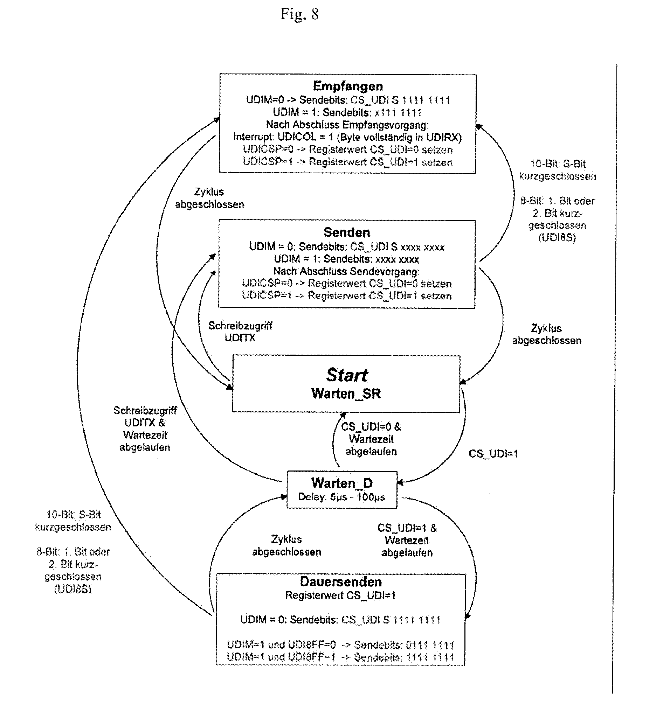

Hierdurch ergibt sich der in Fig. 8 dargestellte Ablauf des UDI: Ausgangspunkt ist der Zustand "Start Warten_SR" unter Hinzunahme der Zustände "Warten_D" und "Dauersenden".
Wird ausgehend vom Start- Zustand das Bit "CS_UDI" gleich 1 gesetzt, erfolgt die Umschaltung in den Zustand "Dauersenden". Dieser Zustand wird wieder verlassen, sobald das 1.-Bit kurzgeschlossen, ein Dauersende-Zyklus abgeschlossen oder ein neuer Wert ins UDITX-Register geschrieben worden ist. Wird das 1.-Bit kurzgeschlossen erfolgt der direkte Übergang in den Zustand "Empfangen". Dabei wird der Registerwert CS_UDI gleich 0 gesetzt und damit das Dauersenden abgebrochen. Wurde der Dauersendezyklus abgeschlossen erfolgt eine Wartezeit, die zwischen 5µs und 100µs in Schritten von 1µs über ein Register eingestellt kann. Wird während oder nach Ablauf der eingestellten Wartezeit das Bit CS_UDI auf 0 gesetzt, führt dies in Ausgangszustand. Anderenfalls wird der nächste Dauersendezyklus ausgeführt. Erfolgte ausgehend vom Zustand "Warten_D" ein Schreibevorgang ins UDITX-Register, wird nach Ablauf der Wartezeit der Zustand "Senden" ausgeführt und der Dauersendemodus deaktiviert.

8-Bit Kompatibilitätsmodus: Durch das Setzen des Bits UDIM=1 im Register 0x2c wird kein explizites Start- bzw. Stoppbit übertragen, sondern lediglich der Inhalt des Registers UDITX. Für die Generierung des Startbits ist in diesem Fall die Software verantwortlich. Damit die Geräteseite Daten versenden kann bzw. der dSC11 in den Empfangsmodus wechselt, ist das 1. oder 2, Datenbit kurzzuschließen. 1st im Register 0x2c das Bit UD18S = 0, dann muss das erste, im Falle von UDI8S = 1 das zweite Datenbit kurzgeschlossen werden. lm Dauersendemodus wird weiterhin eine Folge von "1"-Bits zur Energieübertragung gesendet. Interrupt; Die Generierung des UDICOL-Interrupts wird an den Empfangsmodus gekoppelt.

Das Auslösen des Interruptus darf erst nach dem kompletten Empfang des gesamten Datenbytes erfolgen.

Generell wird im 10-Bit Modus das E/D-Indikatorbit an die erste Bitposition vorgezogen. Gemäß Ablaufdiagramm der Fig. 8 werden die Zustände Empfangen, Senden und Dauersenden angepasst. Im Zustand Empfangen entscheidet das Bit UDICSP ob das Dauersenden nach dem Empfangszyklus wieder aufgenommen wird oder nicht. Entsprechend wird das Bit CS_UDI gesetzt. Das erste Bit im SPI-Modus richtet sich hier nach dem Wert des Registerwerts UDI8FF. Im Zustand Senden gelten die gleichen Regeln wie im Zustand Empfangen. Der µP auf der dSC11 Seite hat dafür zu sorgen, dass das UDITX-Register richtig beschrieben wird, so dass ein Wechsel in den Empfangsmodus möglich bleibt. Für den Übergang gilt die Bedingung, dass im 10-Bit Modus das Startbit und im SPI-Modus entweder das 1, oder das 2. Bit kurzgeschlossen werden können. Ausschlaggebend ist hier der Registerwert UDI8S. Im Zustand Dauersenden legt der Registerwert UDI8S das erste Bit im SPI-Modus fest. Die restlichen Datenbits werden zu 1 gesetzt. Im 10-Bit Modus wird nach dem Bit CS_UDI und dem Startbit automatisch eine Folge von 1-Bits gesendet.

Hierbei ergeben sich die folgenden Registerbelegungen:

Zur Realisierung der geforderten Funktionalität ist ein zusätzliches schreibendes Register notwendig:

**Tabelle 1: CSD_UDI-Register 0x12**

| **Bit** | **7** | **6** | **5** | **4** | **3** | **2** | **1** | **0** |
|---|---|---|---|---|---|---|---|---|
| CSD_UDI | CS_UDI | D_UDI_6 | D_UDI_5 | D_UDI_4 | D_UDI_3 | D_UDI_2 | D_UDI_1 | D_UDI_0 |

Das Bit CS_UDI gibt den Betriebsmodus an. Die Bits D_UDI_<6:0> werden für den Abwärtszähler im Zustand "Warten_D" benötigt. Dabei wird ein Startwert vorgegeben, der dann mit dem Clock-Signal Clk1M dekrementiert werden soll. In dieser Konfiguration sind die geforderten Wartezeiten von 1 µs bis 121µs realisierbar.

Die Auswahl des Betriebsmodus 8/10-Bit ist über den Registerwert UDIM möglich. Der Registerwert UDI8S legt das kurzzuseliließende Datenbit im SPI-Kompatibilitätsinodus fest (UDI8S=0 => 1. Bit; UDI8S=1 => 2. Bit)

**Tabelle 2: Option-Register 0x2c**

| **Bit** | **7** | **6** | **5** | **4** | **3** | **2** | **1** | **0** |
|---|---|---|---|---|---|---|---|---|
| OPTION | PGM1 | PGMO | UDIM | UDI8S | Res | HSP2 | HSP1 | HSP0 |
| ResVal | 0 | 0 | 0 | 0 | 0 | 0 | 0 | 0 |

Das Status-Bit "UDICOL" wird in das IE- und II-Register (hier jetzt "EUDICOL/IUDICOL") gelegt und das Bit<7> "EOTEMP/IOTEMP" ersetzen. Zusätzlich ist darauf zu achten, dass eine Interruptmeldung nur dann durchgeführt wird, wenn der komplette Empfangszyklus abgeschlossen bzw. das vollständige Datenwort im Datenregistet "UDIRX" vorliegt.

**Tabelle 3: IE-Register 0x2e**

| **Bit** | **7** | **6** | **5** | **4** | **3** | **2** | **1** | **0** |
|---|---|---|---|---|---|---|---|---|
| IER | EUDICOL | NRES | EOCSD | EBitRCV | EFETDrv | ELEVNOK | ELEVOK | EZC |
| ResVal | 0 | 0 | 0 | 0 | 0 | 0 | 0 | 0 |

**Tabelle 4: II-Register 0x27**

| **Bit** | **7** | **6** | **5** | **4** | **3** | **2** | **1** | **0** |
|---|---|---|---|---|---|---|---|---|
| IIR | IUDICOL | NRES | IOCSD | IBitRCV | IFETDrv | ILEVNOK | ILEVOK | IZC |
| ResVal | 0 | 1 | 0 | 0 | 0 | 0 | 0 | 0 |

Da sich Teinperaturänderungen relativ langsam vollziehen, ist ein Interrupt für die Erkennung einer Übertelnperatursituation nicht zwingenderweise erforderlich. Durch die Verlegung des Bits "UDICOL" in das IE- und II-Register nimmt das Bit "EOTEMP" nun die freigewordene Postion im Register "STATUS1" (hier jetzt "OTEMP") ein.

**Tabelle 5: STATUS1-Register 0x3d**

| **Bit** | **7** | **6** | **5** | **4** | **3** | **2** | **1** | **0** |
|---|---|---|---|---|---|---|---|---|
| STATUS1 | OTEMP | UDIACK | RRDY | OSCD2 | OSCD1 | POS2 | POS1 | POS0 |
| ResVal | 0 | 0 | 0 | 0 | 0 | 0 | 0 | 0 |

Die freien Plätze im schreibenden Register 0x32 können für die notwendigen Einstellmöglichkeiten genutzt werden. Dabei definiert das Bit ANSEL<7> die Datenübertragungsrate. Das Bit ANSEL<6> konfiguriert die Wertigkeit der ersten Bitstelle im 8-Bit Kompatibilitätsmodus. Die Möglichkeit zur Umschaltung zwischen den beiden Energieübertragungsmodi nimmt das Registerbit ANSEL<5> vor.

**Tabelle 6: ANSEL-Register 0x32**

| **Bit** | **7** | **6** | **5** | **4** | **3** | **2** | **1** | **0** |
|---|---|---|---|---|---|---|---|---|
| ANSEL | UDI12 | UDI8FF | UDICSP | Res | TEN | AS2 | AS1 | AS0 |
| ResVal | 0 | 0 | 0 | 0 | 0 | 0 | 0 | 0 |

UDI12 = 0 => 2MHz Übertragungsmodus
UDI12 = 1 => 1MHz Übertragungsmodus
UDI8FF = 0 => Energiedatenbit 0x7f (0111 1111)
UDI8FF = 1 => Energiedatenbit 0xff (1111 1111)
UDICSP = 0 => Energieübertragung stoppt nach Datensenden/-empfangen
UDICSP = 1 => Energieübertragung schaltet nach einem Datensenden/-empfangen automatisch wieder ein.

## Patentansprüche

1. Galvanisch getrenntes Energie- und Datenübertragungsmodul, umfassend
Einen Übertrager mit einer Primärseite und einer Sekundärseite, wobei an der Primärseite angeschlossen sind,
eine Energiezufuhr zur Versorgung des galvanisch getrennten Energie- und Datenübertragungsmoduls mit Energie, und
eine erste Datenzufuhr, die zur Übertragung von der Primärseite auf die Sekundärseite dem galvanisch getrennten Energie- und Datenübertragungsmodul erste Daten zuführt und einen Pulsgenerator, wobei der Pulsgenerator in der Lage ist, Pulse unterschiedlicher Dauer zu generieren und
eine Ernpfangervorrichtung, die die Erkennung von dem durch den Pulsgenerator erzeugten und von der Primär- auf die Sekundärseite übertragenen und auf der Sekundärseite veränderten und nach der Veränderung auf die Primärseite rückübertragenen Pulse erlaubt, und umfassend
eine primäre Logikschaltung die, die von der ersten Datenzuführ bereitgestellten Daten für die Übertragung über das galvanisch getrennte Energie- und Datenübertragungsmodul verarbeitbar macht, und die von der Sekundärseite Informationen in der Gestalt des auf der Sekundärseite veränderten Pulse zugeführt bekommt und die die Überragung dieser an der ersten Datenzufuhr anliegenden Daten von der Primärseite auf die Sekundärseite über das galvanisch getrennte Energie- und Datenübcrtragungsmodul auf Basis des veränderten Pulses einleitet, und wobei an der Sekundärseite angeschlossen sind
eine zweite Datenzufuhr, die zur Übertragung von der Sekundärseite auf die Primärseite dem galvanisch getrennten Energie- und Datenübertragungsmodul zweite Daten zuführt und,
ein Bitempfänger, der geeignet ist, die vom Pulsgenerator erzeugten Pulse zu empfangen und der geeignet ist, unterschiedliche Pulsdauern des Pulsgenerators zu erkennen, und eine Störsignalgeneriemngseinheit die die durch den Pulsgenerator hervorgerufenen Pulse verändert, umfassend eine sekundäre Logikschaltung, die von der zweiten Datertzufuhr bereitgestellten Daten für die Übertragung über das galvanisch getrennte Energie- und Datenübertragungsmodul verarbeitbar macht, und die von der Primärseite Informationen in der Gestalt des unveränderten Pulses zugeführt bekommt und die die Übertragung der an der zweiten Datenzufuhr anliegenden Daten von der Sekundärseite auf die Primärseite über das galvanisch getrennte Energie- und Datenübertragungsmodul auf Basis des unveränderten Pulses einleitet, indem diese Einleitung, aufgrund einer Abfolge unterschiedlicher Pulsdauern erfolgt

2. Galvanisch getrenntes Energie- und Datenübertragungsmodul nach Anspruch 1, wobei die primäre Logikschaltung, aufgrund der Gestalt von den Bitmustern entscheidet, ob die Übertragung von reinen Energiepaketen mit einem variablen Daten-/Pausenverhältnis gesteucrt/angepasst werden muss oder ob die empfangene Bitmustersequenz einer zu verarbeitenden Dateninformation entspricht.

3. Galvanisch getrenntes Energie- und Datenübertragungsmodul nach einem der Ansprüche 1 oder 2, wobei die durch die Störsignalgenerierungsemheit veränderten Pulse durch einen Kurzschluß verändert werden.

4. Galvanisch getrenntes Energie- und Datenübertragungsmodul nach einem der zuvor genannten Ansprüche, wobei auf Basis des veränderten Pulses von der Energiezufuhr Energie von der Primärseite auf die Sekutidärseite des Übertragers übermittelt wird.

5. Galvanisch getrenntes Energie- und Datenübertragungsmodul nach Anspruch 4, wobei eine vordefinierte Pulssequenz bewirkt, dass die Energiezufuhr Energie von der Primärseite auf die Sekundärseite des Übertragers übermittelt.

6. Galvanisch getrenntes Energie- und Datenübertragungsmodul nach einem der zuvor genannten Ansprüche, wobei das Störsignal ein Kurzschluß ist, der geeignet ist, die durch den Puls übertragene Information zu neutralisieren

7. Galvanisch getrenntes Energie- und Datenübertragungsmodul nach einem der zuvor genannten Ansprüche, wobei unabhängig von den mit der Datenübertragung übertragenen Energiebetrag ein zusätzlicher Energiebetrag von zwischen um die 100mW und um ein Watt übertragen wird.

8. Galvanisch getrenntes Energie- und Datenübertragungsmodul nach einem der zuvor genannten Ansprüche, wobei zur Energieübertragung auf der Primärseite weniger als um die 26 Volt und insbesondere weniger als um die 6 Volt und an der Sekundärseite weniger als insbesondere um die 3,3 Volt anliegen.

9. Galvanisch getrenntes Energie- und Datenübertragungsmodul nach einem der zuvor genannten Ansprüche, wobei der Übertrager ein Windungsverhältnis von zwischen 1 und 15 aufweist.

10. Galvanisch getrenntes Energie- und Datenübertragungsmodul nach einem der zuvor genannten Ansprüche, wobei das Windungsverhältnis 6:9 ist.

11. Galvanisch getrenntes Energie- und Datenübertragungsmodul nach einem der zuvor genannten Ansprüche, wobei die Energieübertragung mit Hilfe einer Frequenz in einem Bereich von um die 100KHZ bis um die zwei Megahertz erfolgt.

12. Galvanisch getrenntes Energie- und Datenüibertragungsmodul nach einem der zuvor genannten Ansprüche, wobei die Pulsdauer zur Einleitung der Datenüberragung von der Sekundärseite auf die Primärtseite kürzer ist, als die zur Einleitung der Datenüberrragung von der Primärtseite auf die Sekundärseite

13. Verfahren zum Betreiben eines galvanisch getrennten Energie- und Datenübertragungsmoduls nach einem der zuvor genannten Ansprüche, umfassend die Schritte:
Primärseitige Generierung eines Datenwortes, bestehend aus einer Startsequenz und
Nutzdaten und/oder Energiedaten
Übertragung des der Startsequenz, umfassend ein Startbit von der Primär- auf die Sekundärseite des Übertragers
Erkennung der Startsequenz
fakultatives Verändern der Startsequenz auf Basis von sekundärseitig eingeführten zweiten Daten, abhängig vom
Erkennen, dass ein Bedarf besteht, Daten von der Sekundärseite auf die Primärseite zu übertragen,
Erkennen, ob für die Datenübertragung genügend Energie auf der Sekundärseite vorhanden ist,
falls nicht sekundärseitig nicht genügend Energie vorhanden ist, primärseitige Einstellung der für eine Datenübertragung sekundärseitig benötigten Energie,
Erkennen, daß der Bedarf Daten von der Primärseite auf die Sekundärseite zu übertragen durch ein sekundärseitig aufgetretenes Sonderereignis, und Übermitteln dieses Sonderereignisses auf die Primärseite,
Einleiten der Energieübertragung von der Primärseite auf die Sekundärseite
Einleiten der Datenübertragung von der Primärseite auf die Sekundärseite.

14. Verfahren zum Betreiben eines galvanisch getrennten Energie- und Datenübertragungsmoduls Anspruch 13, wobei die Verfahrensschritte in der Reihenfolge 1, 2, 3, 4, 5, 6 durchgeführt werden.
